# EUROPEAN PATENT APPLICATION

(11) **EP 4 411 979 A1**
(43) Date of publication of application: **07.08.2024**
(21) Application number: 22875876.9
(22) Date of filing: 16.09.2022
(51) Int. Cl.: H01M 50/595, H01M 10/04, H01M 10/0587, H01M 50/531, H01M 50/586

(54) **CYLINDRICAL BATTERY**

(30) Priority: 30.09.2021 JP 2021160882
(71) Applicant: Panasonic Energy Co., Ltd., Osaka 570-8511 (JP)
(72) Inventor: NOGAMI, Takahiro, Kadoma-shi, Osaka 571-0057 (JP)
(74) Representative: Novagraaf International SA
(86) International application number: PCT/JP2022/034679
(87) International publication number: WO 2023/054005

(57) **Abstract**

In the present invention, an insulative tape (50) is disposed so as to cover a positive electrode lead (20) and a positive electrode mix layer (62). The thickness of a first opposing section (71), of the insulative tape (50), which faces the positive electrode lead (20) is configured to be thinner than the thickness of a second opposing section (72), of the insulative tape (50), which faces the positive electrode mix layer (62). The second opposing section (72) includes a substrate layer (81) and an adhesive layer (82). The first opposing section (71) may be configured so as not to have the adhesive layer (82).

## Description

### TECHNICAL FIELD

The present disclosure generally relates to a cylindrical battery.

### BACKGROUND ART

Among conventional cylindrical batteries, there is a cylindrical battery disclosed in PATENT LITERATURE 1. This cylindrical battery comprises a bottomed cylindrical exterior housing can, an electrode assembly that is housed in the exterior housing can and in which an elongated positive electrode and an elongated negative electrode are wound with a separator interposed between the positive electrode and the negative electrode, and a positive electrode lead welded to the positive electrode. In this cylindrical battery, a thickness of a welding portion of a positive electrode lead plate is set within 1.25 times the thickness of a portion other than the welding portion, thereby suppressing winding misalignment in the welding portion of the positive electrode lead plate when a thickness of a positive electrode mixture layer is smaller than the thickness of the welding portion of the positive electrode lead.

### CITATION LIST

### PATENT LITERATURE

PATENT LITERATURE 1: Japanese Unexamined Patent Application Publication No. Hei03-187155

### SUMMARY

### TECHNICAL PROBLEM

In order to reduce the electric resistance, and the like, the thickness of the positive electrode lead may be larger than the thickness of the positive electrode mixture layer around the positive electrode lead. In such a case, the positive electrode lead projects in a thickness direction of the positive electrode, and thus stress concentration is generated around the positive electrode lead, which may cause local distortion. In this case, due to the local distortion, the reactions at the positive and negative electrodes during charging or discharging are nonuniform, resulting in the degradation of the cycling characteristic.

It is an advantage of the present disclosure to provide a cylindrical battery which can relieve stress concentration generated around an electrode lead and suppress the degradation of a cycling characteristic when the thickness of the electrode lead is larger than the thickness of a mixture layer.

### SOLUTION TO PROBLEM

In order to solve the above-described problem, a cylindrical battery according to an aspect of the present disclosure comprises an electrode assembly in which an elongated positive electrode having a positive electrode current collector and a positive electrode mixture layer and an elongated negative electrode having a negative electrode current collector and a negative electrode mixture layer are wound with a separator interposed between the positive electrode and the negative electrode, a bottomed cylindrical exterior housing can that houses the electrode assembly, a positive electrode lead connected to an exposed portion of the positive electrode current collector, and an insulating tape, wherein the positive electrode mixture layer is provided on one side surface of the positive electrode current collector to which at least the positive electrode lead is connected, a thickness of the positive electrode mixture layer is smaller than a thickness of the positive electrode lead, the insulating tape is disposed to cover the positive electrode lead and the positive electrode mixture layer, and a thickness of a first facing portion in the insulating tape that faces the positive electrode lead is smaller than a thickness of a second facing portion in the insulating tape that faces the positive electrode mixture layer.

A cylindrical battery according to another aspect of the present disclosure comprises an electrode assembly in which an elongated positive electrode having a positive electrode current collector and a positive electrode mixture layer and an elongated negative electrode having a negative electrode current collector and a negative electrode mixture layer are wound with a separator interposed between the positive electrode and the negative electrode, a bottomed cylindrical exterior housing can that houses the electrode assembly, a negative electrode lead connected to an exposed portion of the negative electrode current collector, and an insulating tape, wherein the negative electrode mixture layer is provided on one side surface of the negative electrode current collector to which at least the negative electrode lead is connected, a thickness of the negative electrode mixture layer is smaller than a thickness of the negative electrode lead, the insulating tape is disposed to cover the negative electrode lead and the negative electrode mixture layer, and a thickness of a first facing portion in the insulating tape that faces the negative electrode lead is smaller than a thickness of a second facing portion in the insulating tape that faces the negative electrode mixture layer.

### ADVANTAGEOUS EFFECTS OF INVENTION

In the cylindrical battery according to the present disclosure, the stress concentration generated around an electrode lead can be relieved and the degradation of a cycling characteristic can be suppressed even when the thickness of the electrode lead is larger than the thickness of a mixture layer.

### BRIEF DESCRIPTION OF DRAWING

FIG. 1 is an axial sectional view of a cylindrical battery according to an embodiment of the present disclosure.
FIG. 2 is a perspective view of an electrode assembly of the above-described cylindrical battery.
FIG. 3 is an enlarged schematic radial sectional view around a bonding portion of a positive electrode lead in the above-described electrode assembly.
FIG. 4 is a diagram illustrating an example of a method of producing an insulating tape of the present disclosure.
FIG. 5 is a diagram illustrating a method of sticking the above-described insulating tape.
FIG. 6 is an enlarged schematic sectional view in the conventional cylindrical battery, corresponding to FIG. 3.
FIG. 7 is a diagram illustrating a method of sticking an insulating tape in the conventional cylindrical battery, corresponding to FIG. 5.

### DESCRIPTION OF EMBODIMENTS

Hereinafter, an embodiment of a cylindrical battery according to the present disclosure will be described in detail with reference to the drawings. The cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

It is assumed from the beginning that a new embodiment is constructed by appropriately combining feature portions of embodiments and modifications which are described below. In the following embodiments, the same components are denoted by the same reference numerals in the drawings, and duplicate descriptions are omitted. Schematic diagrams are included in a plurality of the drawings, and the dimensional ratios such as lengths, widths and heights of each member between different drawings are not necessarily the same. In this specification, a sealing assembly 17 side in an axial direction (height direction) of a cylindrical battery 10 is defined as "upper", and a bottom 68 side of an exterior housing can 16 in the axial direction is defined as "lower". Additionally, of the components described below, components that are not described in the independent claim indicating the highest level concept are arbitrary components, and are not essential components.

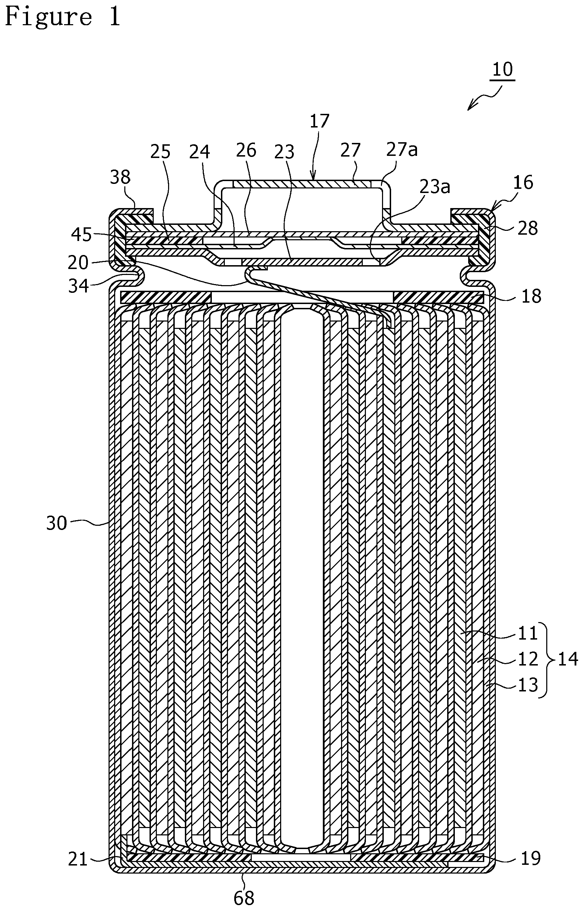

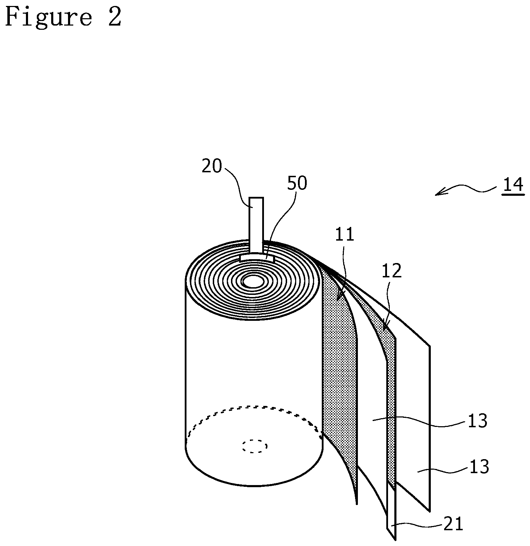

FIG. 1 is an axial sectional view of the cylindrical battery 10 according to an embodiment of the present disclosure, and FIG. 2 is a perspective view of an electrode assembly 14 of the cylindrical battery 10. As illustrated in FIG. 1, the cylindrical battery 10 comprises a wound-type electrode assembly 14, a non-aqueous electrolyte (not illustrated), and a bottomed cylindrical metal exterior housing can 16 that houses the electrode assembly 14 and the non-aqueous electrolyte, and a sealing assembly 17 with which an opening of the exterior housing can 16 is capped. As illustrated in FIG. 2, the electrode assembly 14 has a wound structure in which an elongated positive electrode 11 and an elongated negative electrode 12 are wound with two elongated separators 13 each interposed between the positive electrode 11 and the negative electrode 12.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose, for example, the positive electrode 11 therebetween. The negative electrode 12 may include a winding start end of the electrode assembly 14. However, the separator 13 generally extends beyond a winding start side end of the negative electrode 12, and a winding start side end of the separator 13 serves as the winding start end of the electrode assembly 14.

The non-aqueous electrolyte includes a non-aqueous solvent, and an electrolyte salt dissolved in the non-aqueous solvent. Examples of the non-aqueous solvent may include esters, ethers, nitriles, amides, and mixed solvents containing two or more selected from the foregoing. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte and may be a solid electrolyte that uses a gel polymer or the like. As the electrolyte salt, a lithium salt such as LiPF₆ is used.

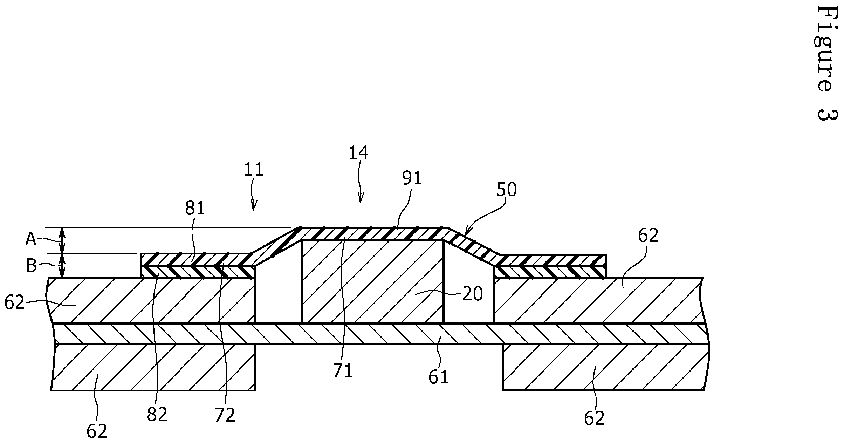

The positive electrode 11 has a positive electrode current collector 61 (see FIG. 3) and a positive electrode mixture layer 62 (see FIG. 3) formed on each surface of the positive electrode current collector. Examples of the positive electrode current collector 61 may include a foil of metal such as aluminum or an aluminum alloy, which is stable within a potential range of the positive electrode 11, and a film in which such a metal is disposed on a surface layer thereof. The positive electrode mixture layer 62 includes a positive electrode active material, a conductive agent, and a binder. The positive electrode 11 can be produced by, for example, applying a positive electrode mixture slurry including a positive electrode active material, a conductive agent, a binder, and the like on a positive electrode current collector 61, drying the resulting coating film, and then compressing the coating film to form a positive electrode mixture layer on each surface of the current collector.

The positive electrode active material is composed of a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn and Al.

Examples of the conductive agent included in the positive electrode mixture layer 62 may include carbon materials such as carbon black, acetylene black, Ketjen black, and graphite. Examples of the binder included in the positive electrode mixture layer may include fluorocarbon resins such as polytetrafluoroethylene (PTFE) and polyvinylidene fluoride (PVdF), polyacrylonitrile (PAN), polyimide resins, acrylic resins, and polyolefin resins. These resins may be used in combination with cellulose derivatives such as carboxymethyl cellulose (CMC) or a salt thereof, a polyethylene oxide (PEO), or the like.

The negative electrode 12 has a negative electrode current collector and a negative electrode mixture layer formed on each surface of the negative electrode current collector. Examples of the negative electrode current collector may include a foil of a metal such as copper or a copper alloy, which is stable within a potential range of the negative electrode 12, and a film in which such a metal is disposed on a surface layer thereof. The negative electrode mixture layer includes a negative electrode active material, and a binder. The negative electrode 12 can be produced by, for example, applying a negative electrode mixture slurry including a negative electrode active material, a binder, and the like on a negative electrode current collector, drying the resulting coating film, and then compressing the coating film to form a negative electrode mixture layer on each surface of the current collector.

As the negative electrode active material, a carbon material that reversibly occludes and releases lithium ions is generally used. A preferable carbon material is graphite including natural graphite such as flaky graphite, massive graphite, and earthy graphite, and artificial graphite such as massive artificial graphite and graphitized mesophase carbon microbeads. As the negative electrode active material, a silicon (Si) material containing Si may be included in the negative electrode mixture layer. As the negative electrode active material, a metal alloyed with lithium other than Si, an alloy containing such a metal, a compound containing such a metal, and the like may be used.

As the binder included in the negative electrode mixture layer, fluorocarbon resins, PAN, polyimide resins, acrylic resins, polyolefin resins, and the like may be used as in the case of the positive electrode 11, and a styrene-butadiene rubber (SBR) or a modification thereof is preferably used. In the negative electrode mixture layer, for example, in addition to SBR and the like, CMC or a salt thereof, polyacrylic acid (PAA) or a salt thereof, polyvinyl alcohol, or the like may be included.

A porous sheet having ion permeability and an insulation property is used as the separator 13. Specific examples of the porous sheet include a microporous thin film, a woven fabric, and a nonwoven fabric. The material of the separator 13 is preferably a polyolefin resin such as polyethylene or polypropylene, or a cellulose. The separator 13 may be either a single layer structure or a laminated structure. A heat-resistant layer or the like may be formed on a surface of the separator 13.

As illustrated in FIG. 1, a positive electrode lead 20 is bonded to the positive electrode 11, and a negative electrode lead 21 is bonded on a winding finish-side in the longitudinal direction of the negative electrode 12. The cylindrical battery 10 has an insulating plate 18 above the electrode assembly 14, and has an insulating plate 19 below the electrode assembly 14. The positive electrode lead 20 extends toward the sealing assembly 17 through a through hole of the insulating plate 18, and the negative electrode lead 21 extends toward a bottom 68 of the exterior housing can 16 through the outside of the insulating plate 19. The positive electrode lead 20 is connected to a lower surface of a bottom plate 23 of the sealing assembly 17, by means of welding or the like. A terminal cap 27 constituting a top plate of the sealing assembly 17 is electrically connected to the bottom plate 23, and serves as a positive electrode terminal. The negative electrode lead 21 is connected to an inner surface of the bottom 68 of the metal exterior housing can 16 by means of welding or the like, and the exterior housing can 16 serves as a negative electrode terminal.

In the example illustrated in FIGS. 1 and 2, the positive electrode lead 20 is electrically connected to an intermediate portion such as a center portion in the winding direction of the positive electrode current collector, and the negative electrode lead 21 is electrically connected to a winding finish-side end in the winding direction of the negative electrode current collector. However, the negative electrode lead may be electrically connected to a winding start-side end in the winding direction of the negative electrode current collector. Alternatively, the electrode assembly may have two negative electrode leads in which one of the negative electrode leads is electrically connected to the winding start side-end in the winding direction of the negative electrode current collector, and the other negative electrode lead is electrically connected to the winding finish-side end in the winding direction of the negative electrode current collector. Alternatively, the winding finish-side end in the winding direction of the negative electrode current collector may be brought into contact with an inner surface of the exterior housing can so that the negative electrode and the exterior housing can are electrically connected to each other.

The cylindrical battery 10 further comprises a resin gasket 28 disposed between the exterior housing can 16 and the sealing assembly 17. The sealing assembly 17 is fixed by caulking to the opening of the exterior housing can 16 with the gasket 28 interposed therebetween. In this way, an internal space of the cylindrical battery 10 is closed. The gasket 28 is held between the exterior housing can 16 and the sealing assembly 17, and insulates the sealing assembly 17 from the exterior housing can 16. The gasket 28 has a role of a seal material for maintaining the airtightness of the inside of the battery, and a role as an insulating material for insulating the sealing assembly 17 from the exterior housing can 16.

The exterior housing can 16 houses the electrode assembly 14 and the non-aqueous electrolyte, and has a shoulder 38, a grooved portion 34, a cylindrical portion 30, and a bottom 68. The grooved portion 34 can be formed by, for example, annularly recessing the one part of the side surface of the exterior housing can 16 toward the radially inward side by a radially inward spinning process. The shoulder 38 is formed by bending an upper end of the exterior housing can 16 to the inner side toward a circumferential edge 45 of the sealing assembly 17 when the sealing assembly 17 is fixed by caulking to the exterior housing can 16.

The sealing assembly 17 has a stacked structure of the bottom plate 23, a lower vent member 24, an insulating member 25, an upper vent member 26, and the terminal cap 27 in this order from the electrode assembly 14 side. Each member constituting the sealing assembly 17 has, for example, a disk shape or a ring shape, and each member except for the insulating member 25 is electrically connected to each other. The bottom plate 23 has at least one through hole 23a. The lower vent member 24 and the upper vent member 26 are connected to each other at respective centers thereof, and the insulating member 25 is interposed between the circumferential edges of the vent members 24 and 26.

If abnormal heat generation occurs in the cylindrical battery 10 and the internal pressure of the cylindrical battery 10 increases, the lower vent member 24 is deformed so as to push the upper vent member 26 upward to the terminal cap 27 side to break, resulting in cutting off of a current path between the lower vent member 24 and the upper vent member 26. If the internal pressure further increases, the upper vent member 26 breaks, and gas is discharged from a through hole 27a in the terminal cap 27. This gas discharge can prevent the cylindrical battery 10 from rupturing due to an excessive increase in internal pressure of the cylindrical battery 10, which makes it possible to improve the safety of the cylindrical battery 10.

FIG. 3 is an enlarged schematic radial sectional view around a bonding portion of the positive electrode lead 20 in the electrode assembly 14. As illustrated in FIG. 3, the positive electrode lead 20 is bonded to an exposed portion of the positive electrode current collector 61, and the positive electrode lead 20 and the positive electrode mixture layer 62 near the positive electrode lead 20 are covered by an insulating tape 50 to prevent a short circuit. The thickness of the positive electrode lead 20 is larger than the thickness of the positive electrode mixture layer 62. The insulating tape 50 is disposed to cover the positive electrode lead 20 and the positive electrode mixture layer 62, and the thickness of a first facing portion 71 in the insulating tape 50 that faces the positive electrode lead 20 is smaller than the thickness of a second facing portion 72 in the insulating tape 50 that faces the positive electrode mixture layer 62.

The insulating tape 50 has a base layer 81 and a glue layer 82 partially provided to stick the insulating tape 50. The glue layer 82 is provided on the positive electrode mixture layer 62 side of the base layer 81 in the second facing portion 72, whereas the first facing portion 71 has no glue layer 82. As a result, the first facing portion 71 is thinner than the second facing portion 72 by the thickness of the glue layer 82. In one side surface of the positive electrode current collector 61 to which the positive electrode lead 20 is bonded, a difference (a dimension indicated by A in FIG. 3) between the thickness of a portion including the first facing portion 71 and the positive electrode lead 20 and the thickness of a portion including the second facing portion 72 and the positive electrode mixture layer 62 is preferably equal to the thickness of the second facing portion 72 (a dimension indicated by B in FIG. 3). This can not only reduce the thickness of the portion including the first facing portion 71 and the positive electrode lead 20 but also equalize variations in the thickness of a step between the first facing portion 71 and the exposed portion of the positive electrode mixture layer 62. In this way, if A,:t B is established, a large surface pressure can be significantly prevented from being locally generated around the positive electrode lead 20 and a cycling characteristic can be significantly prevented from being degraded. Note that if 0.5 ≤ A/B ≤ 1.5 is established, a large surface pressure can be effectively prevented from being locally generated around the positive electrode lead 20 and a cycling characteristic can be effectively prevented from being degraded.

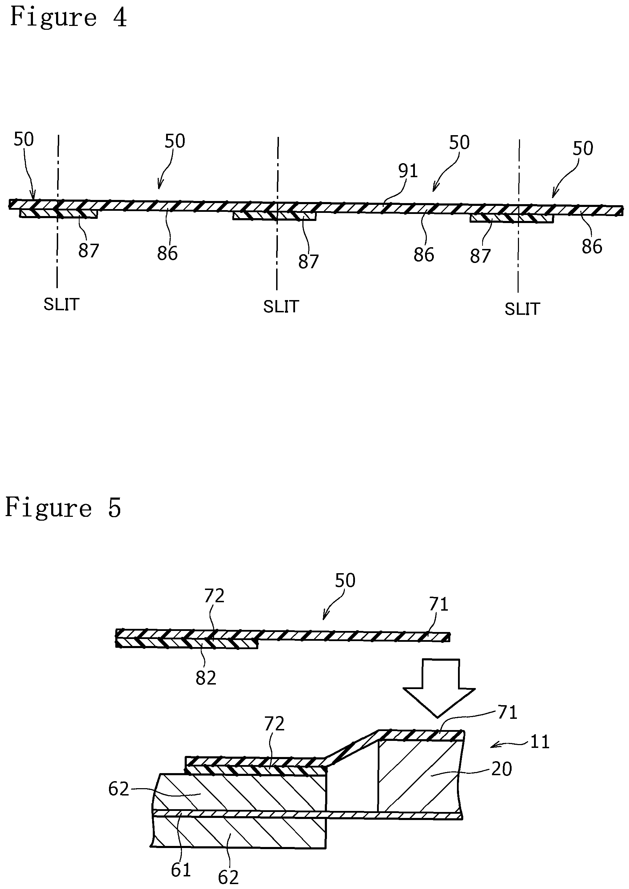

FIG. 4 is a diagram illustrating an example of a method of producing the insulating tape 50. A conventional insulating tape is generally produced by applying glue to the entire surface on one side of the base material and then slitting predetermined portions. However, the insulating tape 50 of the present disclosure is produced by applying glue to a base material 91 so that non-applied portions 86 in which glue is not applied and applied portions 87 in which glue is applied are alternately arranged periodically with a certain interval as illustrated in FIG. 4. Then, the insulating tape 50 is produced by slitting a center of each applied portion 87 on a plane including the thickness direction and the width direction of the base material 91.

FIG. 5 is a diagram illustrating a method of sticking the produced insulating tape 50. As illustrated in FIG. 5, the glue layer 82 formed by applying the glue on each side end of the second facing portion 72 is caused to face the positive electrode mixture layer 62, and the first facing portion 71 in which the glue is not applied at the center of the insulating tape 50 is caused to face the positive electrode lead 20. Then, the insulating tape 50 is stuck to the positive electrode 11 by sticking the glue layer 82 of the second facing portion 72 to the positive electrode mixture layer 62.

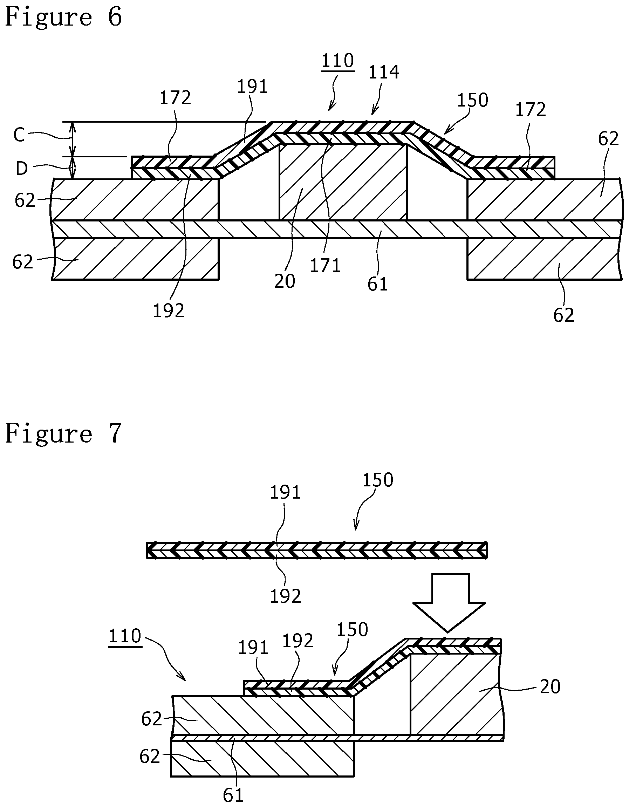

FIG. 6 is an enlarged schematic sectional view in a conventional cylindrical battery 110, corresponding to FIG. 3, and FIG. 7 is a diagram illustrating a method of sticking an insulating tape 150 in the conventional cylindrical battery 110, corresponding to FIG. 5. As illustrated in FIGS. 6 and 7, in the conventional cylindrical battery 110, glue 192 is applied to the entire surface of one surface of a base material 191 with a uniform thickness, and the insulating tape 150 has a uniform thickness. Accordingly, in one side surface of the positive electrode current collector 61 to which the positive electrode lead 20 is bonded, a difference (a dimension indicated by C in FIG. 3) between the thickness of a portion including a first facing portion 171 and a positive electrode lead 20 and the thickness of a portion including a second facing portion 172 and a positive electrode mixture layer 62 is larger than the thickness of the second facing portion 172 (a dimension indicated by D in FIG. 3). In this way, in the conventional cylindrical battery 110, the thickness of the portion including the first facing portion 171 and the positive electrode lead 20 is increased, and further, it is required to reduce the thickness of the positive electrode lead 20 to establish C « D, which makes it difficult to reduce an electric resistance of the positive electrode lead 20.

When the positive electrode and the negative electrode are wound without reducing the thickness of the positive electrode lead, a portion proximate to the positive electrode lead in an electrode assembly 114 projects largely in the thickness direction of a positive electrode 111. A step in which the thickness varies largely is formed between the first facing portion 171 and the exposed portion of the positive electrode mixture layer 62. Therefore, the surface pressure around the positive electrode lead 20 becomes excessive, and thus stress concentration is generated around the positive electrode lead 20, which may cause local distortion. In this case, the reactions at the positive and negative electrodes during charging or discharging are nonuniform, resulting in the degradation of the cycling characteristic.

The present disclosure is not limited to the above embodiment and modified examples thereof, and various improvements and changes are possible within the matters described in the claims of the present application and the scope of equivalence of claims.

For example, in the above embodiment, the glue layer 82 is not provided on the first facing portion 71 so that the thickness of the first facing portion 71 is smaller than the thickness of the second facing portion 72. Alternatively, the thickness of the base layer 81 of the first facing portion 71 may be smaller than the thickness of the base layer 81 of the second facing portion 72 so that the thickness of the first facing portion 71 is smaller than the thickness of the second facing portion 72. In this case, the glue layer 82 may be provided on the entire surface of the base layer 81.

In the above embodiment, there has been described a case where the insulating tape 50 is disposed to cover the positive electrode lead 20 and the positive electrode mixture layer 62. However, the present disclosure can be also applied to a case where the insulating tape 50 is stuck to cover the negative electrode lead and the negative electrode mixture layer. This can prevent a large surface pressure from being locally generated around the negative electrode lead, and can prevent a cycling characteristic from being degraded.

Specifically, the insulating tape is disposed to cover the negative electrode lead and the negative electrode mixture layer, and the thickness of the first facing portion in the insulating tape that faces the negative electrode lead may be smaller than the thickness of a second facing portion in the insulating tape that faces the negative electrode mixture layer. In this case, the second facing portion has a glue layer for sticking the insulating tape, and the first facing portion may have no glue layer.

### REFERENCE SIGNS LIST

10 Cylindrical battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 23 Bottom plate, 23a Through hole, 24 Lower vent member, 25 Insulating member, 26 Upper vent member, 27 Terminal cap, 27a Through hole, 28 Gasket, 30 Cylindrical portion, 34 Grooved portion, 38 Shoulder, 45 Circumferential edge, 50 Insulating tape, 61 Positive electrode current collector, 62 Positive electrode mixture layer, 68 Bottom, 71 First facing portion, 72 Second facing portion, 81 Base layer, 82 Glue layer, 86 Non-applied portion, 87 Applied portion, 91 Base material

## Claims

1. A cylindrical battery, comprising:
an electrode assembly in which an elongated positive electrode having a positive electrode current collector and a positive electrode mixture layer and an elongated negative electrode having a negative electrode current collector and a negative electrode mixture layer are wound with a separator interposed between the positive electrode and the negative electrode;
a bottomed cylindrical exterior housing can that houses the electrode assembly;
a positive electrode lead connected to an exposed portion of the positive electrode current collector; and
an insulating tape,
wherein the positive electrode mixture layer is provided on one side surface of the positive electrode current collector to which at least the positive electrode lead is connected,
a thickness of the positive electrode mixture layer is smaller than a thickness of the positive electrode lead,
the insulating tape is disposed to cover the positive electrode lead and the positive electrode mixture layer, and
a thickness of a first facing portion in the insulating tape that faces the positive electrode lead is smaller than a thickness of a second facing portion in the insulating tape that faces the positive electrode mixture layer.

2. The cylindrical battery according to claim 1, wherein
the insulating tape has a base layer and a glue layer, and
the second facing portion has the glue layer on the positive electrode mixture layer side of the base layer, and the first facing portion does not have the glue layer.

3. A cylindrical battery, comprising:
an electrode assembly in which an elongated positive electrode having a positive electrode current collector and a positive electrode mixture layer and an elongated negative electrode having a negative electrode current collector and a negative electrode mixture layer are wound with a separator interposed between the positive electrode and the negative electrode;
a bottomed cylindrical exterior housing can that houses the electrode assembly;
a negative electrode lead bonded to an exposed portion of the negative electrode current collector; and
an insulating tape,
wherein the negative electrode mixture layer is provided on one side surface of the negative electrode current collector to which at least the negative electrode lead is bonded,
a thickness of the negative electrode mixture layer is smaller than a thickness of the negative electrode lead,
the insulating tape is disposed to cover the negative electrode lead and the negative electrode mixture layer, and
a thickness of a first facing portion in the insulating tape that faces the negative electrode lead is smaller than a thickness of a second facing portion in the insulating tape that faces the negative electrode mixture layer.

4. The cylindrical battery according to claim 3, wherein
the insulating tape has a base layer and a glue layer, and
the second facing portion has the glue layer on the negative electrode mixture layer side of the base layer, and the first facing portion does not have the glue layer.
